# EUROPÄISCHE PATENTANMELDUNG

(11) **EP 0 525 301 A1**
(43) Veröffentlichungstag der Anmeldung: **03.02.1993**
(21) Anmeldenummer: 92105769.1
(22) Anmeldetag: 03.04.1992
(51) Int. Cl.: H01H 13/70, H04B 1/20, H04M 1/274, B60R 16/02, B60R 16/00

(54) **Programmgeber-Aggregat für alle Tasten-bedienten Apparate**

(30) Priorität: 17.12.1991 CH 3741/91; 31.01.1992 CH 281/92; 02.07.1991 CH 1949/91; 05.07.1991 CH 1991/91; 06.07.1991 CH 1992/91; 07.08.1991 CH 2328/91; 17.01.1992 CH 123/92; 23.03.1992 CH 932/92
(71) Anmelder: Weiss, Matthias, CH-4132 Muttenz 2 (CH)
(72) Erfinder: Weiss, Matthias, CH-4132 Muttenz 2 (CH)

(57) **Zusammenfassung**

Diese 'Eintastenansteuerung' ist parallel zu einem Tasten-bedienten Apparat (Tp, N, T) geführt, sei es parallel einer Tastatur (T) zugeordnet, oder geeignet entfernt davon, wie vorzugsweise
- mittels 3-Funktionen-Potentiometer-Schalter-Taster beim Radio realisiert, für ein-ausschalten, Lautstärke regeln und Tasten-Sendersuchwahl,
- mittels 1, 2 bis 3 Tasten/Schalter als Apparate-entfernte Anstecklösung wie vorrangig beim Autoradio als billige Zusteckeinheit,
- mittels 1, 2 bis 3 Aktiv-Tasten/Schalter als Apparate-entfernte Anstecklösung wie vorrangig, um vom Lenkrad aus Autoradio und/oder Mobil- wie Handtelefon - über Aktivhalter (Ha) - zu bedienen.

Hieraus resultiert das Verfahren, welches einen Tasten-bedienten Apparat (T) für Zwei- oder Mehrfunktionen-Bedienung erweitert, wobei die Apparatur (T) vollständig in deren originalem Zustand belassen werden kann und weitere gleichartige und/oder andersartige Funktionen bis automatisierte Abläufe hinzukommen.

Anhang zur Zusammenfassung
Zwei vorrangige Ziele: Tasten-Bedienungsreduktion beim Autoradio-und beim Mobil-/ Hand-TelefonApparat (T).
1. Autoradio: Vorrichtung, um mit einem Knopf (Tp) Ein-/Aus-Schalten, Lautstärke-Regelung und neu Sendersuchwahl zu realisieren, (N, N-Log). Schaltnetzwerk: passiv und/oder aktiv, der originalen Schaltung hinzugeordnet, als Tasten-reduzierende Parallel-Funktion, wonach
   - der Dreifunktionen-Knopf (Tp) fest zugeordnet wird, auch als üblicher Drehknopf mit Tastkontakt und Netzwerk ausführbar, weiters
   - eine Ansteckvorrichtung am Gehäuse und/oder am CHassis erfolgt, um AussenAnsteuerung zu realisieren, wie manuell oder IR-bedientes Set als Sonderzubehör hinzuzuordnen.
2. Mobil-/Hand-Telefon: Vorrichtung, um mit einem Knopf (Tp) und passivem wie aktivem Schaltnetzwerk ( N, Log) automatischen Ansteuerablauf zu erhalten, wie für Rufnummernanwahl, geeignet Sprachausgabe-begleitet (DRAM), wie nachfolgende automatisierte Gesprächsdurchschaltung.

Beim Mobiltelefonapparat ist hienrach Apparate-interne Schaltung-Parallelführungerforderlich, beim Handtelefon kann entweder mit oder ohne Eingriff Eintasten-Ablaufgesteuert werden.

Zu 1.: Zuordnung von aktivem Netzwerk erweitert die Funktionen für Umgebungs-/Austast-Funktion beim Mobiltelefon, Weiteres.

## Beschreibung

Diese Schaltung wird durch Anzapfung von Ansteuer-relevanten Schaltpunkten, oder durch Zuschaltung zu Ansteuer-relevanten Schalttasten gekennzeichnet, bei Zugabe der Schaltung-angepassten passiven und/oder aktiven Netzwerke-(N)-Komponenten, ergänzt durch eine 'Vielzweck-Programmgeber-Structur (Log), ebenso wie durch Netzwerk-unterstützende und Bedienvereinfachende Design's wie etwa die - einzelne DM billige - 3-Funktionen-Bedienlösung beim Autoradio für Ein-Ausschalten, Lautstärke-Regeln und Senderstiche-Wählen (Tₖ, Tₖ 1

Eignung: Für alle laufenden und wiederholbaren Bewegungen, Schaltvorgänge, Schaltabläufe, ab zwei Schritte bis zum komplexen Ablauf reichend, wie für alle Tasten-bedienten Apparate (T) anwendbar als Anordnung und als Verfahren.

Vorrang: Autoradio, Telefon, kleinteils Computer (Behinderten-Handling).

Autoradio: Ein Bedienknopf mit gutem, Design schaltet ein/aus, regelt üblich Lautstärke und schaltet in Schritten mit Tasterzuordnung die Sendersuche.

Parallel hierzu besteht eine Ausgang-Ansteckvorrichtung am Chassis/Gehäuse für Zuschaltung eines Armatur-anschraub-/anklebbaren Taster-Set, oder für eine Lenkrad-Ansteuervorrichtung (IR-Set). Möglich Fahrzeug-serial mittels Mehrbahnen-Lenkradschleifring lösbar, (Tp, N,). Bei Zusatzfunktion von Kommunikations-Aus-Eintasten mit Programmgeber-IC, ( Tp, N, Log).

Mobil-Telefon wie vorgenannt (Tp, N, Log).

Handtelefon wie vorgenannt, mit oder ohne Eingriff in die Schaltung, siehe Aktivhalter in mehreren Varianten, Kombi Tisch, Armatur (Ha). Beim Computer: Makroprogramm für Gestresste, oder Bedien-Ungewohnte mittleren bis reiferen Alters, um Window-Sprünge zusammenzufassen auf die Bedienung von einer 'Eintaste', um mit einem Handgriff 'in das gewünschte Programm zu kommen.

Herkömmliches: Es existiert bereits vielerorts die diese Arbeit tangierende Zusammenfassung von Funktionen, wie Ablaufschaltungen beim Videogerät, Apparateintegriert und Apparate-spezifisch. So sind auch für Fahrzeug-Armatur- und/oder Lenkrad-Bedienung Accessoirs erhältlich, Marken-spezifisch, wie Kosten-intensiv. Auch existieren Lenkrad-IR-Tastaturen/Klaviaturen als Nachrüstbausätze. Computer: Batch-, Default-, Makroprogramme (Tastenreduktion).

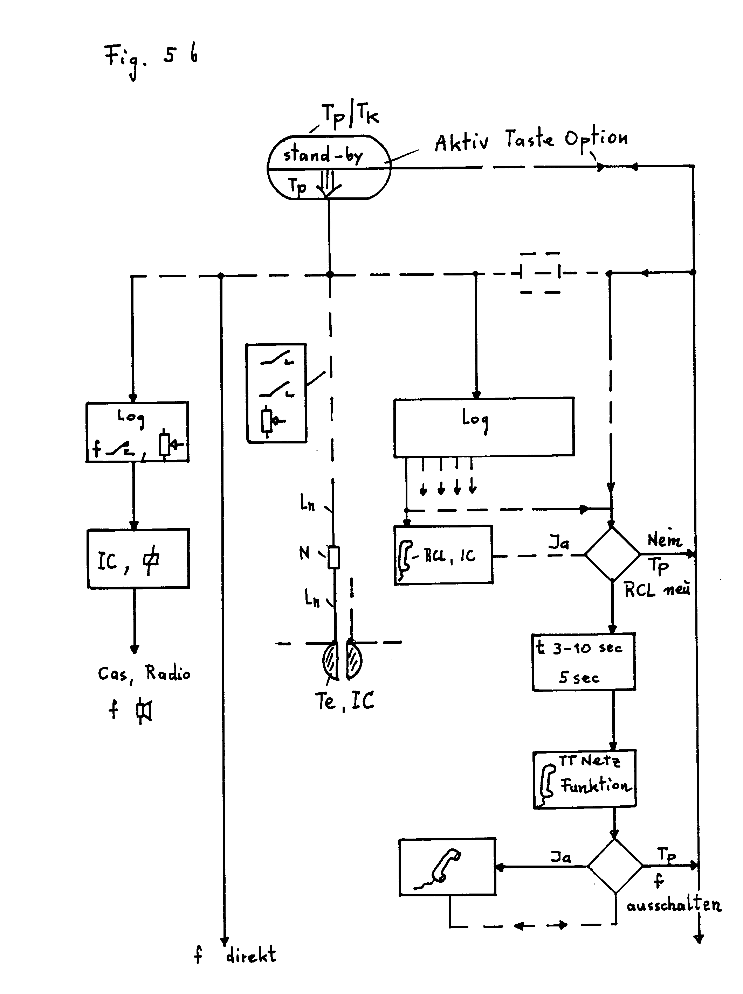

Zudem existieren Dutzende, wenn nicht Hunderte von 'Eintasten-Applikationen' in dieser Zlelrichtung. Aber es existiert noch keine Anordnung, welche für alle Tasten-bedienten Apparate (T) geeignet ist zur Tastenreduzierung, wie auch noch kein Verfahren, welches für einen Apparat (T) aussenparallele Adapter-Bedienung in Tastenreduzierenden Verfahrens-Schritten erlaubt und damit einem Apparat (T) zwei oder mehrere gleichartige und/oder verschiedene Applikationen verleiht. Ziel ist, Sicherheit erhöhen, Komfort steigern, Preis senken. Lösung ist, Universal-Schaltung anbieten, wie das resultierende Verfahren für einfache Parallelschaltung (Tp, Tk, Ln, Log, SA), wie Paralle-/Ablauf-Schaltvorgänge ab der Armatur,wie Lenkrad-Peripherie mittels konfortablen und geeignet bezeichneten Grosstasten, oder direkt ab dem Lenkrad:
1. Beim Autoradio: Senderwahlsuche mit einer Parallel-Taste (Tp 1) ergänzt hinzu auch Ein- /AUS-Schalten, wie Lautstärkeschaltung/Regelung (siehe Fig. 5).
2.Beim Mobil-, Hand-Telefon: mit einer Taste Rufnummernanwahl, parallel, mit LCD-ANZeige wie DRAM-/Casetten-Sprachausgabe des zugehörenden Namens: es folgt Pausenbelegung, ob für Weiterwahl durch wiederholtes Antasten der'Eintaste' (Tp), oder Automatisierung der Gesprächs-Durchschaltung.
3.Computer-Applikations-Ergänzung, möglich für Frustrierte, Behinderte.

Gegenargument: Derlei Büro-Industrie-Apparate sind zur Genüge perfektioniert und die Applikationen sind weitweit eingespielt.

Hinweis: seien es auch nur einzelne Tasten-Applikationen nacheinander, kann hiernach für den Behinderten/Frustrierten mit einer Paralleltaste bei jeder COmputertastatur - von einfachen bis zu komplexen Ablauf-Ansteuerungsvorgängen - durchgeschaltet werden inform von Ablaufautomatisierung.

Fahrzeug-Armatur-Installation: ebenfalls für alle Apparate ergänzbar, kann ein 8 - 10 adriger Kabelbaum von etwa 2,5 Meter serial installiert werden. Aufwand: Autoradio: Netzwerk-Zuordnung, eine modifizierte Serie ergebend.

Mobil-Telefon: Modifiziertes Mikrotelefon (Hörer), Mehradern-Spiralkabel zum Transceiver, Eintastenansteuerbar (Tp).

Handtelefon: Handtelefon-Halter als Eintasten-Aktivhalter (Ha), ohne Eingriff in das Handtelefon bei elektromechanischer Schaltung, ohne oder mit Eingriff und ohne oder mit Ansteckvorrichtung bei elektronisch.mechanischer Schaltung, Eintasten-ansteuerbar (Tp). Bei allen Tasten-bedienten Apparaten (T) möglich, Aufwand im Rahmen von Pfenningen bis DM, siehe 3-Funktionen-KomponentenFig. 5.

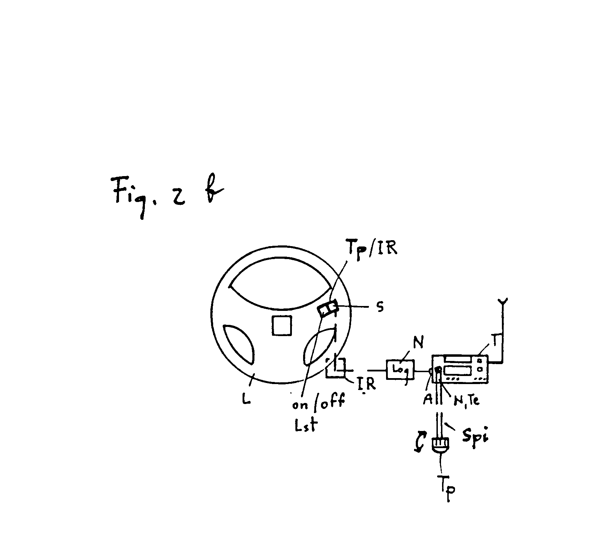

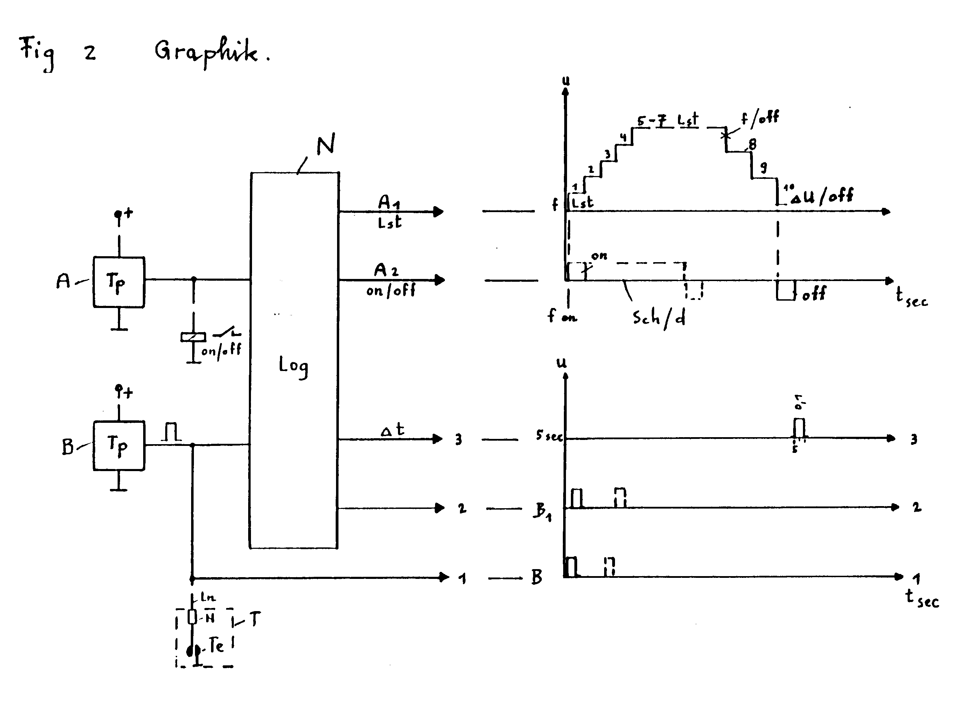

Auf die - beispielsweise anklebbaren - Grossflächen-Komfort-Zusatz-Taste(n) bezogen, als verkabelte Armatur-Fernbedienung (Tp Fig. 2). Accessoirs mit IR-Aktiv-(oder Strahlenfeld-Passiv-) Tasten kommen preislich, vom Fachmann installiert auf den Rahmen von einigen hundert DMark.

Der Programmgeber: Er ergänzt die 'Eintasten-Parallelschaltung' (Tp) für automatisierte Schaltabläufe (Log):
a) in einfacher Ausführung, wenn mit einer Taste/Knopf (Tp) zwei bis vier Funktionen wie beim Autoradio geschaltet werden sollen (Fig. 2
b), teilautomatisiert,
b) in aufwendigerer Ausführung, wenn - wie beim Mobil- oder Handtelefon - Schalt-, Sprachausgabe-Parallelschaltung (RCL, DRAM) und nachfolgende Gesprächsdurchschaltung () automatisiert werden sollen, bestückbar/programmierbar für alle Marken/Modelle von Telefonapparaten, verbilligt bei solchen mit Speicher (RCL). Zusatzfunktionen des Programmgebers (Log):
   a) Durch Zuordnung in eine RTV-Fernbedienung wird dieselbe zur Mehrzweck-Fernbedienung wie folgt: - Eintasten-Einfunktionen-Bedienung verbleibt so wie bisher, - Ablaufschalt- oder Szenarien-Bedienung für besipielsweise Morgen-, oder Abend-Schaltung, Büro-Heimbedarf kommt hinzu,
   b) Nach a), ergänzt mit 1, 2 oder 3 Mikro-Wippschaltern (quecksilberfrei) wird eine RTV-Fernbedienung zur 2 bis 6-Ebenen-Fernbedienung, je nach Bedarf mit Grosstasten für Ablauf, oder gar mit neuen Accessoirs zusätzlich ausgestattet.

Dabei ist der Programmgeber, ob Logik-Karte oder IC-Chip (wie ASIC) derart strukturiert, dass derselbe vorrangig mit einer Taste, einem Schalter, einem Sensor für automatisierte Abläufe arbeitet. Am Elngang können bis zu 4 einzelne Ansteuer-Elemente vorgesehen werden, auf besonderen Wunsch erweiterbar: begründet damit, dass hiernach die originale Vieltastenfunktion parallelgeführt würde, wenn auch tasten-reduziert, was nicht dem Zweck entspricht (Tp, N, Log), es sei denn für Behinderte.

Zudem ist Ein-Ausgabe-Struktur vorgesehen, um Echo-Kontrollen zu erhalten. Aber auch, um anstelle eines Sensors/Tasters (Tp) ein Empfangsgerät wie Autoradio/Transceiver (T, Tc) hinzuzuschalten, damit beispielsweise durch Selbstauslösung oder durch Aussenanruf ein Zerstörung-geschützter Alarmgeber aktiviert werden kann: (Fahrzeug-, Autoradio-/Transceiver-Diebstahl, Weiteres.

Konzeption für Mittel- und Gross-Serien: Chip-Netzwerk, ASIC-Programmgeber mit synchronisiertem DRAM, Fahrzeug-Kabelbaum.

Ansteuerung: Verkabelte Tasteneinheit, anklebbar an der Armatur, oder IR-Aktiv-Taste; 80 Kc-Feld Passiv-Taste am Lenkrad eher zu kostenlastig.

Apparate: Autoradio, Telefon-Transceiver (T, Tc), wie Alarmanlage (SA).

Es wird hier daran gedacht, aus Kostengründen für Serialbestückung eine Autoradiob-Mobiltelefontransceiver-Kombination zu kreieren.

Und zu den bekannten Funktionen hinzu zu gestalten, wie
- Diebstahl des Fahrzeuges lässt Eigenoder/und Aussen-Alarm aktivieren,
- Sensor-Stab/Sensor-Keil gibt bei Unfall-Karosseriestauchen Rufalarm,
- Antennan-Schaden/Demontage löst Aktiv-Alarm und/oder Rufalarm aus.

Allgemeiner Beschrieb:
Vorzugsweise für die neuzeitlichen Folientastaturen ist diese 'Eintastenansteuerung, verbunden mit dem zugehörenden Netzwerk (Tp, Ln, N, Te) und dem Ansteuerung-erweiternden Programmgeber (Log) konzipiert, als neues design oder als neues Ausführungsbeispiel gekennzeichnet, woraus auch ein neuess Verfahren entsteht, dass zugleich die originale Eintasten-Einfunktionen-Schaltung beibehalten wird/werden kann und neu hinzukommt, dass von aussen her oder hinzugeordnet an/in der Apparatur in Tasten-reduzierter Form am optimalen Bedienstandort die Haupt-Ansteuerungsmerkmale erfasst und benutzt werden.

So entsteht für alle Tasten-bedienten Apparate (T, Tc) ein verkabeltes oder drahtloses (Fern-) Bedienset.

Soll eine Serie Autoradios Modifiziert werden für ein-ausschalten, weiters für Stufen-Lautstärkeregelung(Schaltung), wie für Senderwahl, so ist ein geeignetes Netzwerk, Leitungsführung und Ansteckvorrichtung am Gehäuse nötig, im Kostenrahmen von Pfennigen - DM.

### Accessoirs

Für die vorgenannten drei Funktionen wird ein Armatur-anklebbares Steuerset mit geeigneten Grosstasten, beschrieben als Accessoir aktuell um die DM 30,-kosten.

Um den Faktor 5 bis 10 werden sich die Kosten erhöhen, soll vom Lenkrad aus eine, zwei drei oder mehr Funktionen angesteuert werden.

Dann können - über den Programmgeber (Log) einzelne Funktionen mit einer 'Eintaste' automatisiert werden, wie ein-ausschalten, verbunden mit Lautstärke, regelgeschaltet oder feiner gedimmt, der Ein-Aus-Schalter wird demnach aktiviert in der Stellung/Funktion der Lautstärke (on/off = f volume).

Bei Alarm-Funktionen: umgekehrt, bei Einsatz-Folge im Fahrzeug, wie bei Diebstahl, bei Verkehrsunfall erfolgt
- Rufnummeranwahl-Meldung durch Stab- /Stössel-Sensor über Programmgeber (Log),
- desgleichen und Alarm über Aussenanruf an Mobil-/Handtelefon (T, Tc, MT) und ergeht über (Log) Schaltung an einen Zerstörunggeschützten Alarmgeber (SA),
- Demontage, abbruch der Emfangs-Antenne gibt ebenfalls Alarm über Schaltung (Log, Brücke, Tc, SA).

Der Programmgeber: als IC-Karte, oder als Chip (ASIC, Weiteres) ausgeführt.

Input: Einzel-Eingänge, EXOR, Anforderungs-orientierte Eingänge,

Output: allerart, üblich impulsförmige und stabile Ausgänge, einzeln und für Abläufe, schalt und/oder programmierbar.

### Beschrieb: Fortsetzung.

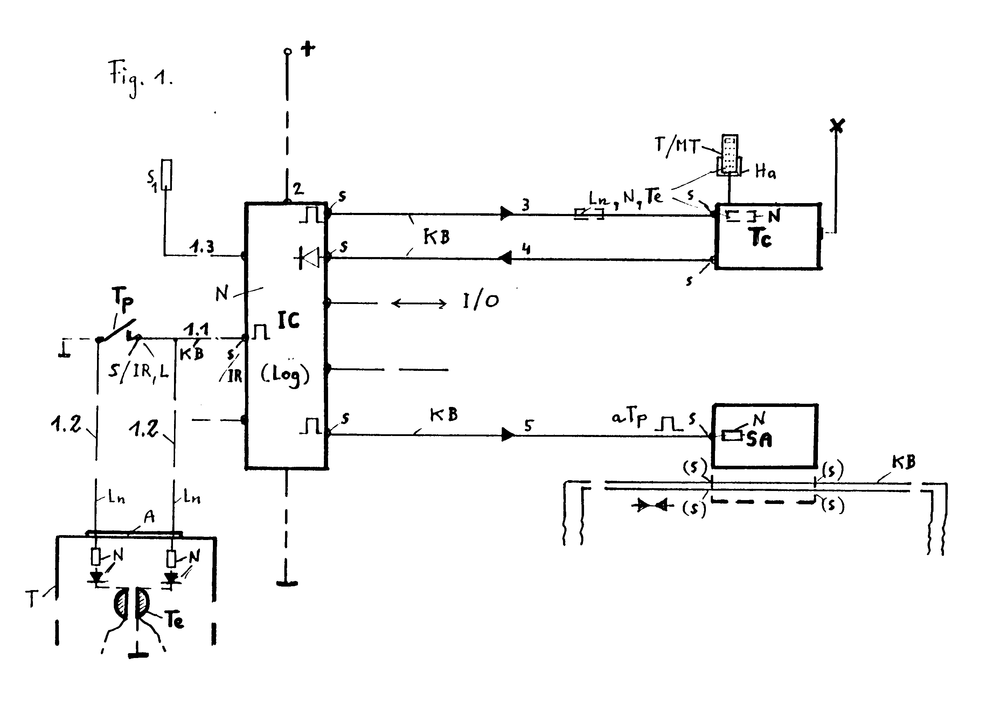

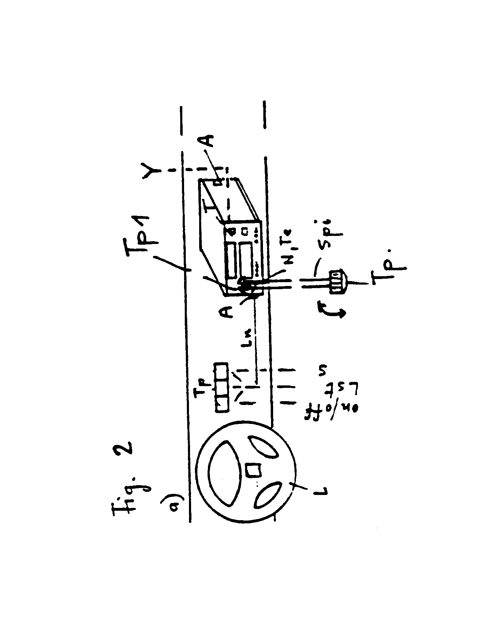

Fig. 1. kennzeichnet beispielsweise, wie die 'Eintaste' (Tp) und der Programmgeber (Log,N) wie das Netzwerk (Ln,N) geschaltet werden. Programmgeber-Eingänge (Log).:
   Eingang 1.1 aktiviert Log für eine beispielsweise Ablaufschaltung beim Mobil- oder Handtelefon (T) oder Aktiv-Halter (MT, Ha). Weiteres beim Autoradio (T,Tc). Dort wird vorrangig Netzwerk (N) ebenso zugeordnet oder integriert sein,wie dies bei der vereifnachten 'Direkten Parallel-Ansteuerung' bei 1.2 erkenntlich wird (Tp, Ln, N, Te), beispielsweise an einem Autoradio für einfache Abläufe nacheinander von Hand bedienbar, jedoch an das Lenkrad oder dessen Peripherie verlegbar, wo geeignetes Grosstasten-Set ansteuert (Tp) an den originalen Apparat (T).
   Eingang 1.2 kennzeichnet, wie ein 3-Tasten-Set in unmittelbarer Lenkradperipherie anschraubbar wie anklebbar wird, welches verkabelt ansteuert, wie
      - 1 Taste, Kippe für Ein-Aus-Schalter
      - 1 Dreiebenen-Kippschalter für den Lautstärke-Mittelwert, sowie für Null- oder für Maximalwert, möglich Lautstärkeregler-orientiert,
      - 1 Taste, Kippe als Impulsgeber für die Senderwahl (3Tp + N oder 2Tp + N,Log).
   Fahrzeug-seriale Verdrahtung mittels Kabelbaum (KB) erleichtert zudem die Installation. Reparatur-Kontrolle: Originalschaltung voll erhaltbar + Zusteckeinheiten. Apparate-Modifizierung: sei es durch Schaltwert-angepasste Netzwerkzuordnung (N), sei es durch Apparate-interne (T,N,Te) Schaltung-Ergänzung (N, IC, Log) als Integration, sei es durch Sensor-aktive und Schaltungrelevante Tasten wie (RCL) Rufnummern-/Sender-Suchtasten-Anordnungen, so wird hierbei eine Ansteckvorrichtung am Apparat (A) vorgesehen, um von aussen her durch Zustecken eines Adapters/Set Aussenansteuerung (N,Log,Ad) zu erreichen. Oder aber über Lichtschranke Sensor-Aktivtasten direkt ansteuern (el, N, Te). Weiteres: Anstelle einer Taste (Tp), oder entsprechend nebenbei tritt ein Autoradio und/oder ein Telefon-Transceiver (T, Tc) als Alarmgeräte-Ansteuer-Sensor (Tc über Log an SA) auf. Bei Diebstahl kann von aussen/von fern her die Alarmanlage aktiviert werden. Bei Antennenabbruch wird durch Brückenstörung der Alarm aktiviert. Bei Hammer-Zerstörung des Alarmsystems ist eine Mehrzahl von Fahrzeug-Elektrokabeln unterbrochen.Ergebnis: zerstörsichere Alarmanlage über Log: Fahrzeug ⁼ inaktiv.

Fig. 2., a) und b) veranschaulichen Lage- wie Schaltung-gemäss die Anordnung, die Ansteuerung, wie das Parallel-Ansteuerungs-Verfahren von Original-Apparatebedienung und vereinfachte Parallelbedienung.
Fig. 2., a) kennzeichnet beispielsweise ergänzend zu Fig. 1., wie auf die einfachste Art mit drei Schalttasten parallel anzusteuern ist,
Fig. 2., b) desgleichen mit zwei Tasten und zuschaltung einer Logik (Ein-Aus-Schaltung ist f = Lautstärke, A 2 = f A 1); ebenso die 3-Funktionen-Variante nach detail Fig. 5.

So wie sich also das Vorgenannte auf die Tastenfunktion A Tp bezieht, so bezieht sich das Nachfolgende auf die Tastenfunktion B Tp, ob einfache Parallelbedienung eines Kommunikationsapparates (T) vorliegt, oder dieselbe mit Ablaufschaltung versehen ist, (Tp, Ln, N, Te, oder Tp, Log, Ln, N, Te).

Gemeinsam ist Fig. 1., Anschluss 1.3 an Log, wie auch bei Fig. 2., hiernach von einer beispielsweisen Sensoren-Stange/Keil (S₁) im Frontraum eines Fahrzeuges kommend, um über Log den Transceiver-Aufruf, wie Weiteres im/vom Fahrzeug aus zu automatisieren, wie Rufnummer an Zuhause, Polizei, Notruf, Weiteres (S₁, Tc/Tc, SA).

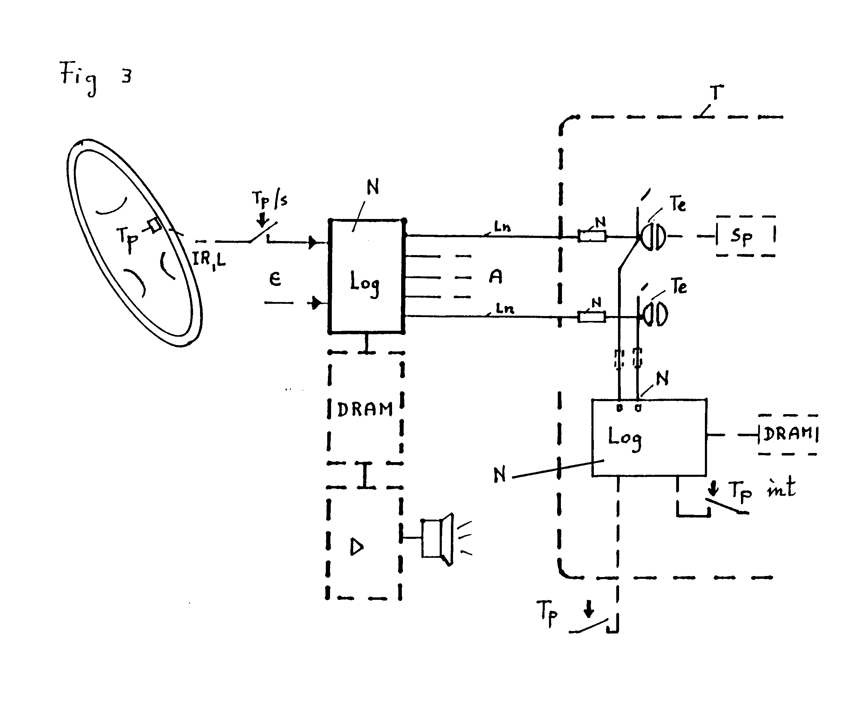

Fig. 3. kennzeichnet beispielsweise die erweiterte Funktion der Ablauf-Automatisierung, hier Apparate- und Anwender-spezifisch schalt- und Programmierbar für Mobil- oder Hand-Telefon jeder ^{*} mit Zuschaltung von Logik-Funktion aus Log kann ein Taster/Schalter für zwei Funktionen benutzt werden, wie Ein-Ausschalten in f =51autstärke, schaltbar/regelbar, Dimmerfunktion, wie Kommunikation - Ein-/Austasten. Weiteres: Anstelle der genannten Tasten/Schalter können Sensortasten treten (S/IR, L) wie Bewegungs-Sensoren, IR-Aktivtasten ab Lenkrad; Passiv-Störfeld-Tasten als Variante, ebenso HF-/UHF-/USch.-Aktivtasten. Marke (Tp,IR,L,E,Log,A,Ln,N,Te,DRAM/T,MT,Ha). Es zeigt den 'Eintasten-Eingang', EXOR den Behinderten-Ansteuer-Eingang:
für möglichen Anchluss einer Tetraplegiker-Steuerungs-Möglichkeit für Rollstuhlfahrzeug, Handling, wie Weiteres, (S₁, S₂, EXOR, T).

Einer der fundamentalen Vorteile des Mehrfunktionen-Programmgebers (Log) ist neben der Parallel-Ablauf-Steuerung bis Ablauf-Automatisierung hier die Erhaltung der originalen Funktionen bei m angesteuerten Apparat (T), aber auch beim Fahrzeug und dessen Motorik wie Elektrik:
- Entstörung des Programmgebers gegen Ausseneinflüsse,
- bei Abschalten erfolgen die originalen Bedienabläufe (Abschalten = Enthalten, unbenutzt lassen).

Dieses Funktionen-erweiterte Beispiel zeigt auch die Zuschaltung von Sensorik (S₁ bis), wie bei Autoradio/Telefonapparat (T) als Kommunikations- und Alarm-Anwahl-Vermittler (S₁, Tc/T, MT an SA).

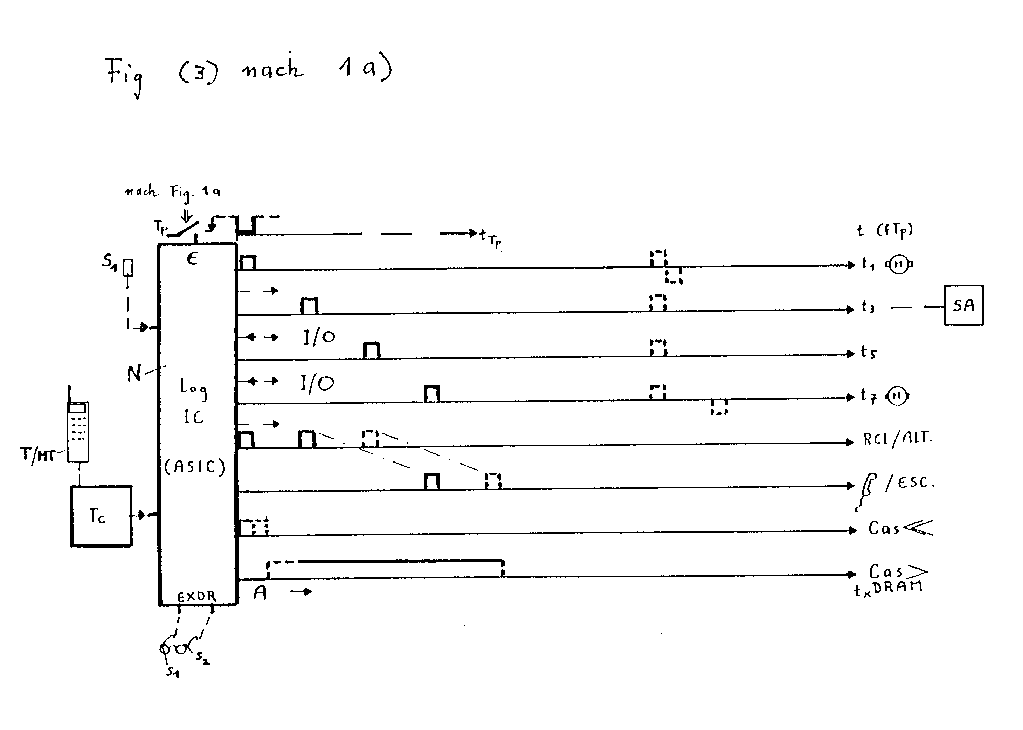

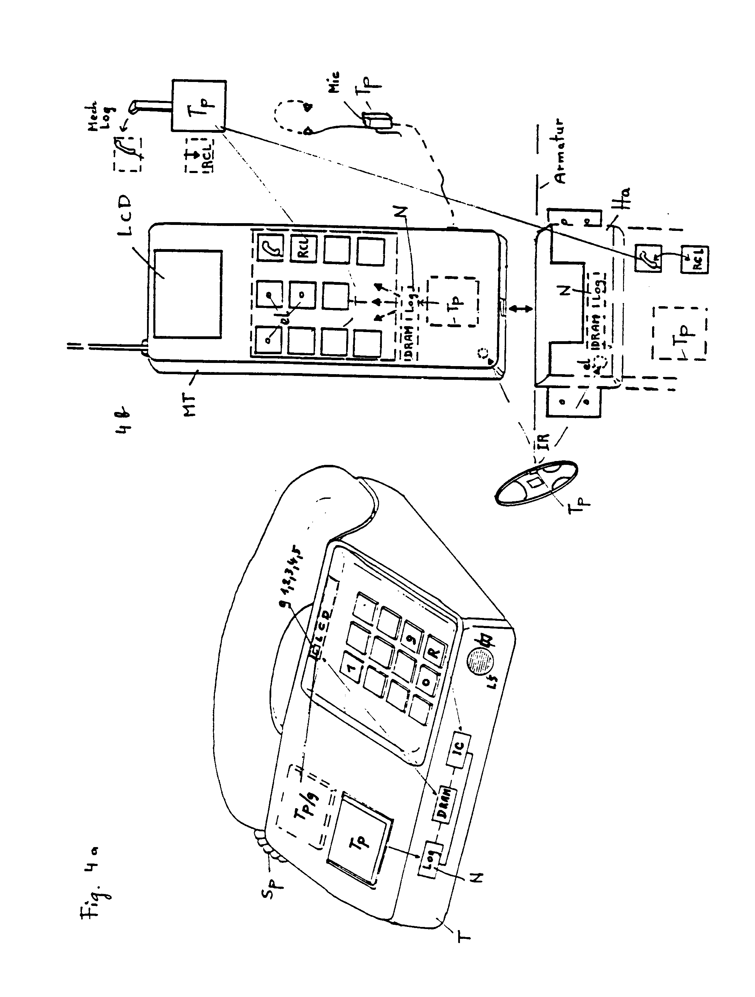

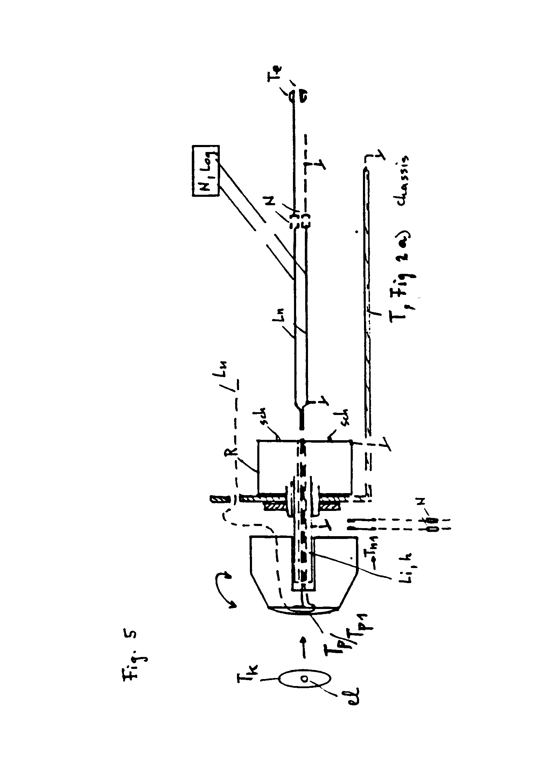

Der Programmgeber (Log) ist mit einem hierzu geeigneten Impuls-SChema begleitet. Infolgedessen kann jede aktuelle Schaltung, den Schaltwiderständen von (Folien-Niederohm-) Tasten/Schaltern entsprechend, nach aussen hin ein dementsprechendes Netzwerk in der Anpassung erfolgen, bei Bedarf abgeschirmt oder in einer Art von Uebertragung (N, el). Fig. 4., a) kennzeichnet beispielsweise ein Tisch-Telefonapparat (T), hiernach mit der 'Eintaste'(Tp) ausgerüstet, welche nach Bedarf 5, 10, oder 20 bis mehr Speicher-Rufnummern abruft, Sprach-DRAM Sprachausgabe-begleitet. Für das vereinfachte Blättern kann eine zweite 'Eintaste' hinzugeordnet werden, welche Anwahlgruppen zu etwa je 5 Rufnummern auswählt, wie 1-5, 6-10, 11-15, 16-20, 21-25 und weiters 26-30, Anwenderbezogen (Tp/g). Bei Aufruf der erwünchten Rufnummer ertönt parallel zur LCD-Anzeige der Name des Adressaten/Angerufenen. Nun kann regelbar eine Anwahl-Pause eingelegt werden, wie bewährt 5 Sekunden beim Behinderten, wie beim Autofahrer, innert welcher Zeitspanne derselbe neu weiterwählen kann, automatisch durchschalten lassen kann, oder rückstellen: über den Programmgeber (Log) oder direkt. Ebenso das Mobil- oder Handtelefongerät/Apparat (MT).

Fig. 4., b) zeigt weiters beispielsweise, wie neben der vorgenannten Integration oder Zuordnung hiernach ein Aktiv-Halter (Ha) derart modifiziert wird, dass derselbe
- mit elektronisch.mechanischer Ausrüstung Ablauf-schaltet (Ha, Log),
- vereinfacht elektromechanisch 2-3 Stufen automatisiert Ablauf-schaltet(Mech-Log).
- Eine Lösung ohne Ansteck-Vorrichtung (A) ist mit Elektromechanismus, oder mit rein mechanischer 2-Funktionen-Feder-Lösung für Antippen, oder eine Strahleneinkopplung über

Halter an Aktivtasten (el) möglich. Ziel für die Beispiele von Ablauf-Ansteuerung nach Fig. 1. bis 4 ist, für die seriale Zuordnung, oder teilweise bis vollständige Integration IC-Chip's zu konzipieren, welche multifunktional nach den Schemata zu Fig. 2 b) und Fig. 3 arbeiten und deren Hardware- wie Software-Konzeption allein schon für die meisten auftretenden Ansteuer-Strukturen genügt. Sodass allein relativ einfache SPezifikationen durch Brükken und/oder Software-Eingaben anzupassen sind, mit Ein-Ausgabe-Struktur und mit DRAM-Synchronisation vedrsehen (Ablauf Fig. 5 b).

Bevorzugt können zwei Varianten Autoradios für Ein-Ausschalten und für Senderwahl mit 2-Tasten-set realisiert werden, im Apparat einfaches Widerstandsnetzwerk mit Ansteckvorrichtung am Gehäuse, wie Schalterparallelführung nach Herkömmlichem. Als zweite Variante ist die Einblock-Zweitasten-IR Fernbedieneinheit mit Sender am Lenkrad, als Sonderzubehör anbietbar.

Soll die Lautstärke geschaltet/geregelt werden, so ist Erweiterung mittels 3-Ebenenschalter, oder mittels aktivem Schaltnetzwerk, wie etwa auf Fig. 2., b) oder auf Fig. 3 zielend erweiterbar. Varianten im selben Sinn gelten für Mobil- wie hand-Telefone/Halter, mit erweiterter Aktiv-Schaltnetzwerk-/Programmgeber-Funktion und Schrittverfahren.

Fig. 5. zeigt einen 3-Funktionen-Schalter-Regler-Taster einfachster Zuschaltstruktur, (Sch, R, Tp, Tp 1, Tk, Tk 1, N).

## Patentansprüche

1. Schaltnetzwerk (N, Log) passiven und/oder aktiven Aufbaues, einem elektronischen Apparat (T) zugeordnet oder integriert, als Anordnung für Aussenansteuerung mit Zusatztaste (Tp) und/oder Zusatzschalter (Tp), dadurch gekennzeichnet, dass hierdurch im Apparat (T) alternative Einzel- bis Ablauf- 'Aussen-oder Parallelschaltungen' und Anpassungen realisiert werden, welche die Apparate-internen Schaltelemente oder Netzwerke (T) 'aussenparallel' führt und/oder umgeht und/oder gar ersetzt und dies für alle Tastenbedienten Apparate (T) geltend, weiters in Verbindung mit 1, 2 oder drei Wippschaltern für Mehr- bis Sechs-Ebenen-Ansteuer- oder Apparatefernbedienung für Einzelbefehle und daneben für Szenarien- /Ablaufschaltungen geeignet ist, wie auch für Handling, bedarfsweise auch als I/O-Schaltnetzwerk mit Log-synchroner Sprachausgabe geeignet ist (N, Log, DRAM) und im Weiteren als Adapter-, Herstellungs-, Einsatz- und/oder Ansteuerungs-Verfahren für hiernach Zwei-oder Mehrfunktionen- und/oder Mehrabläufe-Tastaturen zu einem Apparat (T) gekennzeichnet ist, wonach der Apparat (T) dessen originale Funktionen vollumfänglich behalten kann und parallel hinzu 'Eintasten-Ansteuerung und/oder Ablaufsteuerung erhält (Tp, Log, N, Te, IC), wobei jede 'Elntaste' (Tp) eine oder mehrere Funktionen ansteuert (Fig. 2 b) wie/oder als Schalter-Regler-Taster (Fig. 5).

2. Schaltnetzwerk nach Anspruch 1., (Ln, Log, Ln, N, Te, IC), als Schaltungparallelgeführtes Netzwerk zugeordnet und/oder integriert, mit Leiterbahnen wie Verdrahtung unterstützte Struktur für Ausrüstung oder Nachrüstung.

3. Schaltnetzwerk nach Anspruch 1., dadurch gekennzeichnet, dass eine oder mehrere passive oder/und aktive Tasten (Tp, Fig. 5 b) auf sensorische oder/und transformatorische, wie strahlenförmige Ansteuerungen oder Ankopplungen erweitert werden (Tp), Einzelbefehle und/oder Abläufe steuerun und dies beim Fahrzeug bevorzugt vom Lenkrad oder von dessen naher Peripherie aus, wie über Passiv-Taste im Strahlenfeld, weiters über IR-Taste, oder Kontakttaste (Tp und über Mehrbahnen-Lenkradschleifring verlaufend, Autoradio-und/oder Mobil- wie Handtelefon ansteuern können (Tp, Log, N, Te, IC), wobei auch mindestens eine Taste zwei oder mehr Funktionen ansteuern kann.

4. Schaltnetzwerk nach ANspruch 1. und 3., auf einen Autoradioapparat bezogen (T) und dadurch gekennzeichnet, dass derselbe in vereinfachter Ansteuerung ein Armatur-anbringbares Taster-/Schalter-Set erhält, wobei eine Taste (Tp) die Senderwahl und ein 3-Ebenen-Kippschalter die Lautstärkeregelung/Schaltung übernimmt, wobei durch Zuordnung eines 'Aktiven Schaltnetzwerks' wie IC zur Taste (Tp) hiernach zwei oder mehr Funktionen wie Abläufe schaltet, wie Ein-/Aus-Schalten und Lautstärke,- ohne Umschaltprozedere,- das Eine in-(f) Abhängigkeit vom Anderen durchführen (Tp, Log, N, Te/IC).

5. Schaltnetzwerk nach Anspruch 1., auf ein Mobil- oder Hand-Telefonapparat (T) bezogen und dadurch gekennzeichnet, dass passives und aktives Netzwerk (Tp, Log, N, Te) mit einer Taste (Tp) von Lenkrad oder von dessen unmittelbarer Peripherie aus - mit einer gut plazierten und gut ausgebildeten Taste - ausgeführt werden kann wie
- Rufnummernanwahl, bei Bedarf Sprachausgabe-begleitet wie DRAM oder Casetten-Gerät, als neue Apparate-Struktur (Tp an IC/Log,DRAM, N, IC, Te),
- gefolgt von Pausenbelegung für die Weiterwahl mit der 'Eintaste' (Tp), oder
- für die nachfolgende 'Gespräch-Durchschaltautomatik', (Log, DRAM-synchron) für einzelne Abläufe geeignet, bis zu komplexen Abläufen reichend,
wobei das Anpassungsnetzwerk (N) aus passiven Elementen wie Widerständen, Dioden, wie Weiterem gekennzeichnet ist und/oder aus aktiven Elementen wie IC's, wobei die einfachste Anpassung darin besteht, möglichst nahe an Tastenelektroden und/oder IC-Anschlüssen wie SChaltpunkten den seltenen Hochohmwerten und fast durchgehend Niederohmwerten der Folientasten-Schaltelemente die Werte-entsprechenden Anpassungselemente (N) parallel zuzuordnen, so wie die Werte auftreten zwichen 1 und 100 Ohm hier als Einzelelemente und/oder als konfektionierte Elemente/Netzwerke zuzuordnen, bei Bedarf vorher/nachher abschirmbar, für die Tastenreduktion und/oder für die Zwei- bis Mehrfunktionen-Tastatur geeignet.

6. Schaltnetzwerk nach Anspruch 1. und 5., dadurch gekennzeichnet, dass dieselbe mindestens teilwiese auf einen Aktiv-Halter für Hand- telefon (Ha) übertragen wird, um denselben (Ha) neben der aktuellen Zuordnung von Lade-Ausrüstung auch für die 'Eintasten-Ablaufschaltung' einzurichten, als Aktivhalter für die Fahrzeugarmatur und für den Büro-/Heim-Tisch geeignet, hiernach als neues Design oder als neues Ausführungsbeispiel gekennzeichnet.

7. Schaltnetzwerk nach ANspruch 1., gekennzeichnet als entstörtes und störungs-gesichertes Aktiv-Netzwerk (N), um Fahrzeug-, Autoradio-, Mobil- oder handtelefon- ebenso auch wie zerstörungsgesicherte Fahrzeugalarmanlage zu bedienen, in der Abhängigkeit zu jenen in Apparate (T) geschlaufte Fahrzeugelektrik, wie auch in Antennen- und Elektroanschluss-überwachte Brückenschaltungen, weiters für Handling, Airbag-Ueberwachung.

8. Schaltnetzwerk nach Anspruch 1., neben den Konstruktions-Merkmalen der Anordnung hier durch ein Verfahren gekennzeichnet, wonach die Verfahrens-Schritte der Aussenansteuerung entweder gleich jener am/im originalen Apparat oder dessen Tastatur (T) sind und/oder Bedarfwie Anwender-spezifisch Ansteuerung- wie Ablauf-automatisierend sind, ohne die originalen Funktionen oder Anordnungen zu beeinträchtigen,
bei allen Tasten-bedienten Apparaten (T) einsetzbar, wobei mindestens eine Taste (Tp) neben den originalen Tasten an/in der Tastatur (T) als besondere Ansteuertaste zugeordnet werden kann und/oder in Adapterform separat an- oder zugeordnet wird, desgleichen auf das passive oder aktive Netzwerk bezogen, nach dem Apparat (T) oder nach dem Bedarf einem Apparat (T) und/oder einem Adapter (Ad, N) zugeordnet, wobei der Adapter (Ad) als 'Kombi-Taster- und/oder Schalter-Regler-Einheit' ausgebildet sein kann(Fig. 5), mit geeignetem aktiven Netzwerk ergänzt (Log nach Fig. 1 und 2b).

9. Schaltnetzwerk nach Anspruch 1. und 8., gekennzeichnet durch Programmgesteuertes Parallel-Steuerungsverfahren (Ablaufprogramme nach Fig. 3. und 5), wobei auch Ein-/Ausgabe-Funktionen (1/0) in allen erforderlichen 'Logischen Funktionen' zum Einsatz gelangen und dies wie folgt
- ob als Nachrüstungs-BAusatz einem Apparat (T) zugeordnet und/oder
- ob als integrierte Erweiterungs-Anordnung eingeordnet (Log, N, IC, Te),
wonach ein Bauteil oder Bedienteil wie etwa ein Knopf drei oder mehr Funktionen einnimmt, bei Bedarf auch in Abhängigkeit von mindestens einer Originalfunktion eines Apparates.

10. Schaltnetzwerk nach Anspruch 1. und 8., auf die Autoradio-'Einknopf-Bedienung' bezogen und dadurch gekennzeichnet, dass neben der originalen (Komfort-) Tastatur (T) die Senderwahlfunktion und/oder die Casetten-Bedien-FUnktion 'Eintasten- oder Einknopf' - parallelgeführt wird, beleuchtbar, wodurch dem Autoradio eine 'Bedienknopf-Schaltreglereinheit' zugeordnet wird, welche
- ein-aus-schaltet,
- Lautstärke regelt,
- Sendersuchwahl durchführt,
wodurch beim Autofahren Sicherheit erhöht wird und der Autoradio-Bedienkomfort gesteigert wird, da hiernach mit einem Knopf - an gewohnter Stelle - alle nötigen Funktionen für 'Radiohören oder stoppen' erfüllt werden, wobei neben den drei Funktionen durch 'Ein-/Ausschalten' oder durch 'Lautstärke-Auf-Abdrehen' (Fig. 2 b) auch weitere Funktionen wie
- Empfangs-Band-Wechsel in Karusselfunktion und/oder
- Umschalten auf Casettenfunktion erfolgen kann,
indem der Bedienknopf-Schaltregler-Einheit passive und/oder aktive Elemente (Log, N) zugeordnet werden.
